# EUROPEAN PATENT APPLICATION

(11) **EP 3 572 849 A1**
(43) Date of publication of application: **27.11.2019**
(21) Application number: 17893419.6
(22) Date of filing: 21.11.2017
(51) Int. Cl.: G02B 5/08, C03C 17/36, F24S 23/70

(54) **CSP MIRROR AND METHOD FOR PRODUCING GLASS SUBSTRATE WITH FILM FOR CSP MIRRORS**

(30) Priority: 18.01.2017 JP 2017006983
(71) Applicant: AGC Inc., Tokyo 100-8405 (JP)
(72) Inventor: IWAOKA, Hiroaki, Tokyo 100-8405 (JP)
(74) Representative: Müller-Boré & Partner Patentanwälte PartG mbB
(86) International application number: PCT/JP2017/041811
(87) International publication number: WO 2018/135124

(57) **Abstract**

A concentrated solar power mirror includes a glass substrate; a reflective layer containing silver; and a coating layer arranged between the glass substrate and the reflective layer. A total iron weight concentration in the glass substrate is 200 ppm or less, assuming that iron forms Fe₂O₃ and using a weight of Fe₂O₃. An arithmetic average surface roughness of a reflective layer side surface of the coating layer is 0.4 nm or more. An energy reflectance of the CSP mirror is 94.3% or more, when a thickness of the glass substrate is 2 mm.

## Description

### TECHNICAL FIELD

The present invention relates to a CSP (concentrated solar power) mirror and a method for manufacturing a glass substrate with a CSP mirror film.

### BACKGROUND ART

Recently, CSP (concentrated solar power) systems have been attracting attention. In a CSP system, sunlight is concentrated on a predetermined region by a mirror (in the following, referred to as a "CSP mirror") and heat is accumulated. The heat is used for generating power. CSP systems use sunlight as energy sources, and are expected to become a popular power generating system.

Typically, a CSP mirror used in the CSP system includes a glass substrate; and a reflective layer containing silver arranged on a surface of the glass substrate. An angle of the CSP mirror is determined so that the glass substrate faces the sun. Sunlight entering the glass substrate in the above-described state is reflected at the reflective layer, and exits from the glass substrate in a predetermined direction.

Patent document 1 discloses arranging a protective layer on a surface of the reflective layer on a side opposite to the glass substrate, to protect the reflective layer in the CSP mirror.

### [Citation List]

### [Patent Literature]

[PTL 1] WO 2016/009745

### SUMMARY OF THE INVENTION

### [Problem to be solved by the invention]

The efficiency of a CSP system is affected by an amount of sunlight from the CSP mirror. Thus, the amount of sunlight from the CSP mirror is required to be increased.

The present invention is has been made in view of the above-described problem, and aims to provide a CSP mirror of greater amount of sunlight than that from the conventional CSP mirror. Moreover, the present invention also aims at providing a method for manufacturing a glass substrate with a film used for such a CSP mirror.

### [Means for Solving Problems]

The present invention provides a CSP mirror including a glass substrate; a reflective layer containing silver; and a coating layer arranged between the glass substrate and the reflective layer, a total iron weight concentration in the glass substrate being 200 ppm or less, assuming that iron forms Fe₂O₃ and using a weight of Fe₂O₃, an arithmetic average surface roughness of a reflective layer side surface of the coating layer being 0.4 nm or more, and an energy reflectance of the CSP mirror being 94.3 % or more, when a thickness of the glass substrate is 2 mm.

Moreover, the present invention provides a method for manufacturing a glass substrate with a CSP mirror film, including a step (1) of manufacturing a glass substrate with a total iron weight concentration of 200 ppm or less, assuming that iron forms Fe₂O₃ and using a weight of Fe₂O₃, from a glass ribbon, during the step (1) a coating layer being deposited by using a CSV method on an upper surface of the glass ribbon, and an arithmetic average surface roughness of a surface of the coating layer being 0.4 nm or more.

### [Effect of invention]

According to the present invention, a CSP mirror of a greater amount of sunlight than that of the conventional mirror is provided. Moreover, according to the present invention, a method for manufacturing a glass substrate with a film used for such a CSP mirror is provided.

### BRIEF DESCRIPTION OF THE DRAWINGS

FIG. 1 is a cross-sectional view schematically depicting a CSP mirror according to an embodiment of the present invention.
FIG. 2 is a cross-sectional view schematically depicting an example of a coating layer included in the CSP mirror according to the embodiment of the present invention.
FIG. 3 is a cross-sectional view schematically depicting another example of the coating layer included in the CSP mirror according to the embodiment of the present invention.
FIG. 4 is a flowchart schematically depicting a method for manufacturing the CSP mirror according to the embodiment of the present invention.
FIG. 5 is a diagram depicting a relation between a thickness of the coating layer and an energy reflectance Re.

### [Modes for Carrying Out the Invention]

In the following, the present invention will be described in detail with reference to the drawings.

### (CSP mirror according to an embodiment of the present invention)

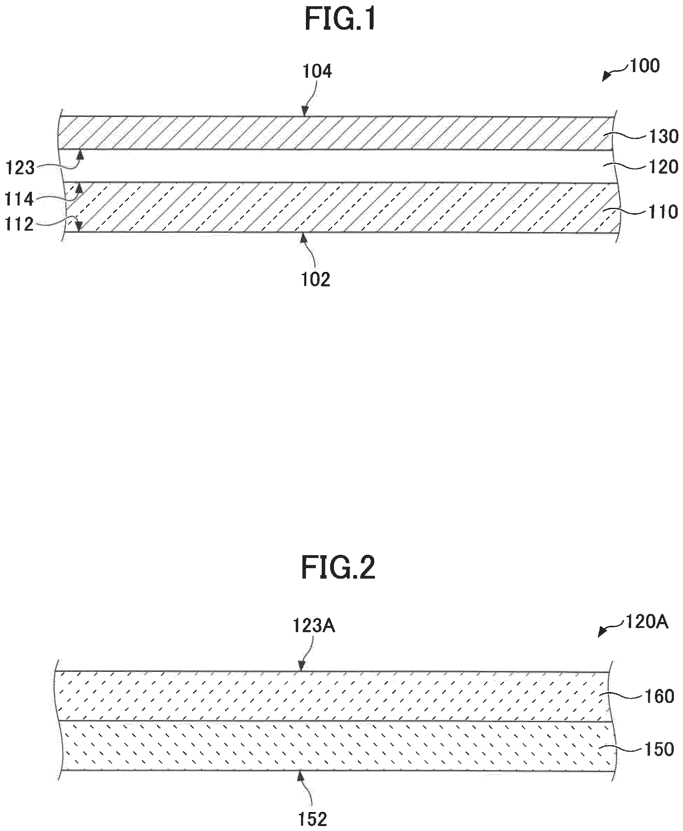

FIG. 1 is a cross-sectional view schematically depicting an example of a CSP mirror according to an embodiment of the present invention.

As shown in FIG. 1, the CSP mirror 100 (hereinafter, referred to as a "first CSP mirror") according to the embodiment of the present invention includes a glass substrate 110, a coating layer 120, and a reflective layer 130, in this order.

The first CSP mirror 100 has a first side 102 and a second side 104. When the first CSP mirror 100 is actually used, the first side 102 is set to face outwards, i.e. the first side 102 faces the sun.

The glass substrate 110 has a first main surface 112 and a second main surface 114 that face each other. The first main surface 112 side of the glass substrate 110 corresponds to the first side 102 of the first CSP mirror 100, and the second main surface 114 side of the glass substrate 110 corresponds to the coating layer 120 side.

On the second main surface 114 side of the glass substrate 110, the coating layer 120 is arranged. The coating layer 120 has an upper surface 123. The upper surface 123 of the coating layer 120 has a surface roughness (arithmetic average roughness Ra) of 0.4 nm or more.

The coating layer 120 enhances the reflectance of the first CSP mirror 100. The coating layer 120 will be described in detail later.

A reflective layer 130 is arranged on the upper surface 123 of the coating layer 120. A surface of the reflective layer 130 corresponds the second side 104 of the first CSP mirror 100.

The first CSP mirror 100 has a total iron (Fe) concentration (weight concentration, the same applies to the following) in the glass substrate 110 is 200 ppm or less, assuming that iron forms Fe₂O₃ and using a weight of Fe₂O₃. With such a low total iron (Fe) concentration, absorption of sunlight entering the glass substrate 110 would be reduced significantly, and transmittance would be significantly enhanced.

Moreover, the coating layer 120 increases the amount of sunlight reflected at the reflective layer 130 according to an interference effect, which will be described later. Thus, the reflectance for sunlight is increased by the coating layer 120 arranged between the glass substrate 110 and the reflective layer 130.

Moreover, in the first CSP mirror 100, an arithmetic average roughness Ra of the upper surface 123 of the coating layer 120 is 0.4 nm or more.

According to such a structure of the upper surface 123 of the coating layer 120, the reflective layer 130 is significantly prevented from being separated from the coating layer 120.

The first CSP mirror 100 having the above-described structure is arranged so that the first side 102 is irradiated with sunlight, when the first CSP mirror 100 is used. Sunlight enters the first CSP mirror 100 through the first side 102.

In this case, the sunlight passes through the glass substrate 110, and enters the coating layer 120 and the reflective layer 130. Moreover, the sunlight is reflected at the reflective layer 130, passes through the coating layer 120 and the glass substrate 110 again, and exits from the first CSP mirror 100 at a predetermined angle.

As described above, the iron (Fe) concentration of the glass substrate 110 is suppressed, and the transmittance of the glass substrate 110 is enhanced. Moreover, the reflective of the sunlight at the coating layer 120 is enhanced.

Thus, the first CSP mirror 100 significantly enhances the reflectance of the sunlight. Moreover, the first CSP mirror 100 increases the amount of sunlight from the glass substrate 110, and the efficiency of the CSP system is enhanced.

For example, an energy reflectance Re of the first CSP mirror 100, when a thickness of the glass substrate is converted to 2 mm, is increased to 94.3 % or more.

Moreover, in the first CSP mirror 100, an arithmetic average roughness Ra of the upper surface 123 of the coating layer 120 is 0.4 nm or more. Thus, even if the coating layer 120 were arranged between the glass substrate 110 and the reflective layer 130, i.e. even if the number of interfaces in the first CSP mirror 100 were increased by one, the possibility of occurrence of peeling at the interfaces would not be increased.

### (Components of the CSP mirror)

Next, the components configuring the CSP mirror according to the embodiment of the present invention will be described in detail. In the following, the components of the first CSP mirror 100 illustrated in FIG. 1 will be described, as an example. Moreover, for clarity, the reference numerals in FIG. 1 will be used for illustrating the components.

### (Glass substrate 110)

As described above, the total iron (Fe) concentration in the glass substrate 110 is 200 ppm or less, assuming that iron forms Fe₂O₃ and using a weight of Fe₂O₃. The total iron (Fe) concentration is preferably 175 ppm or less.

The composition of the glass substrate 110 is not particularly limited as long as the total iron (Fe) concentration falls within the above-described range. The glass substrate 110 may be made of, for example, soda lime glass, borosilicate glass, or quartz glass.

A thickness of the glass substrate 110 is not particularly limited. The thickness falls within a range of, for example, 1.1 mm to 6 mm.

### (Coating layer 120)

The coating layer 120 is made of a transparent material. The material of the coating layer 120 is not particularly limited as long as the reflectance of the first CSP mirror 100 is enhanced.

The coating layer 120 may be composed of a single layer. Alternatively, the coating layer 120 may include a plurality of layers.

When the coating layer 120 is composed of a single layer, the coating layer 120 preferably includes silica (SiO₂). More preferably, the coating layer 120 is made of silica.

When the coating layer 120 is a single layer of silica, a thickness of the coating layer 120 falls within a range of, for example, 10 nm to 100 nm, and preferably falls within a range of 40 nm to 60 nm.

Moreover, as described above, the arithmetic average roughness Ra of the upper surface 123 of the coating layer 120 is 0.4 nm or more. Thus, adhesiveness between the coating layer 120 and the reflective layer 130 is enhanced.

The arithmetic average roughness Ra is preferably 0.8 nm or more.

The coating layer 120 may be deposited by using a conventional vapor deposition, such as a vacuum vapor deposition, an ion plating method, a sputtering method, a chemical vapor deposition (CVD) method (a thermal CVD method, a plasma CVD method, or an optical CVD method), or an ion beam sputtering method.

For example, the coating layer 120 may be formed by using an "inline vapor deposition".

The term "online vapor deposition" means depositing a layer on a surface of a glass substrate during a process of manufacturing the glass substrate. Specifically, during the process of manufacturing the glass substrate, a glass ribbon is slowly cooled while being carried on a molten tin, and thereby a glass substrate is continuously produced. By using the "inline vapor deposition", a coating layer 120 is deposited on an upper surface of the glass ribbon while being carried. That is, in the embodiment, the glass substrate 110 is manufactured and the coating layer 120 is deposited simultaneously by using the "inline vapor deposition". Thus, the glass substrate 110 having the coating layer 120 ("glass substrate with film") is produced by the process of manufacturing a glass substrate.

When the coating layer 120 is deposited by using the inline vapor deposition, the coating layer 120 preferably includes a combination of a "low refraction index layer" and a "high refraction index layer", which will be described later.

In particular, a vapor deposition other than the "inline vapor deposition" is referred to as an "offline vapor deposition".

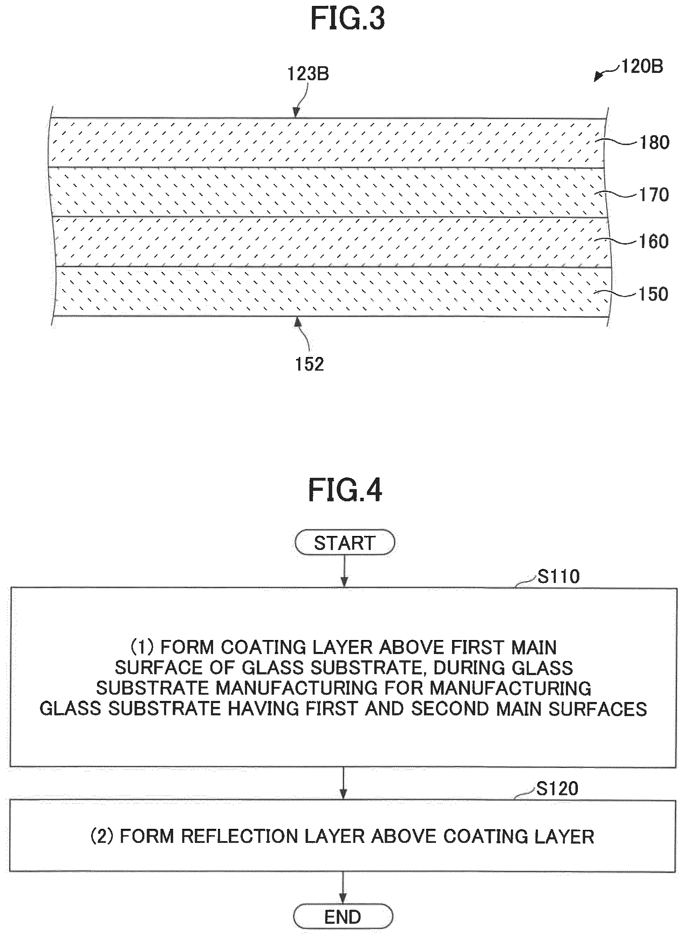

In the following, with reference to FIGS. 2 and 3, an example of a configuration of the coating layer 120 will be described.

FIG. 2 is a cross-sectional view schematically depicting an example of the coating layer.

As shown in FIG. 2, the coating layer 120A has a two-layer structure including a first layer 150 and a second layer 160.

The first layer 150 has a lower surface 152, and the second layer 160 has an upper surface 123A.

The coating layer 120A is arranged in the first CSP mirror 100, such that the first layer 150 is adjacent to the glass substrate 110, and the second layer 160 is adjacent to the reflective layer 130. Thus, the lower surface 152 of the first layer 150 is a surface adjacent to the glass substrate 110 in the coating layer 120A, and the upper surface 123A of the second layer 160 is a surface adjacent to the reflective layer 130.

A refraction index of the first layer 150 is greater than a refraction index of the second layer 160. In the following, the first layer 150 will be referred to as a "high refraction index layer" and the second layer 160 will be referred to a "low refraction index layer".

The refraction index of the first layer 150 is preferably 2 or more. For example, the first layer 150 is made of at least one compound selected from titanium oxide (TiO₂), silicon nitride (SiN), aluminum nitride (AlN), tin oxide (SnO₂), zinc oxide (ZnO), niobium oxide (Nb₂O₅), tantalum oxide (Ta₂O₅), and zirconium oxide (ZrO). Among the above-described compounds, titanium oxide (TiO₂) is preferably used.

A thickness of the first layer 150 falls within a range of, for example, 10 nm to 110 nm, and preferably a range of 20 nm to 100 nm.

The refraction index of the second layer 160 is preferably less than 1.5. The second layer 160 preferably includes silica (SiO₂) or is made of silica.

A thickness of the second layer 160 falls within a range of, for example, 40 nm to 90 nm, and preferably a range of 50 nm to 80 nm.

The coating layer 120A includes a high refraction index layer 150 adjacent to the glass substrate 110; and a low refraction index layer 160. It is easy to match the phase of sunlight reflected at the reflective layer 130 with the phase of sunlight reflected at the high refraction index layer 150 or the low refraction index layer 160, with the coating layer 120A of the first CSP mirror 100 having the above-described structure.

Thus, the energy reflectance Re of the first CSP mirror 100 with the coating layer 120A is higher than that with a single layer of silica used for the coating layer.

FIG. 3 is a cross-sectional view schematically depicting another example of the coating layer.

As shown in FIG. 3, a coating layer 120B has a four-layer structure, including a first layer 150, a second layer 160, a third layer 170 and a fourth layer 180.

The first layer 150 has a lower surface 152, and the fourth layer 180 has an upper surface 123B.

The coating layer 120B is arranged in the first CSP mirror 100 such that the first layer 150 is adjacent to the glass substrate 110 and the fourth layer 180 is adjacent to the reflective layer 130. Thus, the lower surface 152 of the first layer 150 is a surface adjacent to the glass substrate 110 in the coating layer 120B, and the upper surface 123B of the fourth layer 180 is a surface adjacent to the reflective layer 130.

Structures of the first layer 150 and the second layer 160 are the same as the structures of the first layer 150 and the second layer 160 respectively in the coating layer 120A. Thus, description of the structure of the first layer 150 and the second layer 160 of the coating layer 120B will be omitted in the following.

A refraction index of the third layer 170 is greater than refraction indices of the second layer 160 and the fourth layer 180. In the following, the third layer 170 will be referred to as a "second high refraction index layer" and the fourth layer 180 will be referred to as a "second low refraction index layer".

The refraction index of the third layer 170 is preferably 2 or more. For example, the third layer 170 is made of at least one selected from titanium oxide (TiO₂), silicon nitride (SiN), aluminum nitride (AlN), tin oxide (SnO₂), zinc oxide (ZnO), niobium oxide (Nb₂O₅), tantalum oxide (Ta₂O₅), and zirconium oxide (ZrO). Among the above-described compounds, titanium oxide (TiO₂) is preferably used.

A thickness of the third layer 170 falls within a range of, for example, 10 nm to 110 nm, and preferably a range of 20 nm to 100 nm.

The refraction index of the fourth layer 180 is preferably less than 1.5. The fourth layer 180 preferably includes silica (SiO₂), or is made of silica.

A thickness of the fourth layer 180 falls within a range of, for example, 40 nm to 90 nm, and preferably a range of 50 nm to 80 nm.

As described above, the coating layer 120B includes the high refraction index layer 150 adjacent to the glass substrate 110; the low refraction index layer 160; the second high refraction index layer 170; and the second low refraction index layer 180. The coating layer 120B, used for a coating layer for the first CSP mirror 100, facilitates a matching the phase of sunlight reflected at the reflective layer 130 with the phase of sunlight reflected at any one of the layers 150 to 180.

Thus, the energy reflectance Re of the first CSP mirror 100 with the coating layer 120B is higher than the energy reflectance Re with the coating layer 120A, which is illustrated in FIG. 2.

The example of the configuration of the coating layer 120 in the first CSP mirror 100 has been described with reference to FIGS. 2 and 3.

However, the above-described configuration is merely an example, and alternative configurations of the coating layer 120 are possible.

For example, the coating layer 120 may have a structure with six layers or with eight layers. In the coating layer 120 having the six layers structure, a third high refraction index layer is arranged on the fourth layer 180, as shown in FIG. 3, and a third low refraction index layer is arranged on the third high refraction index layer. Moreover, in the coating layer 120 having the eight layers structure, a fourth high refraction index layer is arranged on the third low refraction index layer, and a fourth low refraction index layer is arranged on the fourth high refraction index layer.

According to the above-described structures, the energy reflectance Re of the first CSP mirror 100 is increased.

### (Reflective layer 130)

The reflective layer 130 typically includes silver or a silver alloy.

The reflective layer 130 may be a single layer or may include a plurality of layers.

A thickness of the reflective layer 130 (total thickness, if the plurality of layers are included) falls, for example, within a range of 50 nm to 5000 nm.

### (First CSP mirror 100)

An energy reflectance Re of the first CSP mirror 100, when a thickness of the glass substrate 110 is converted to 2 mm, is 94.3% or more. The energy reflectance Re is preferably 94.4% or more.

The energy reflectance Re is measured by using a method based on ISO 9050.

### (Method of manufacturing a CSP mirror according to an embodiment of the present invention)

With reference to FIG. 4, an example of a method of manufacturing a CSP mirror according to an embodiment of the present invention will be described. In the following, a method of manufacturing the CSP mirror by using an inline vapor deposition will be described.

FIG. 4 is a flowchart schematically depicting a method of manufacturing a CSP mirror according to the embodiment of the present invention (hereinafter, referred to as a "first manufacturing method").

As shown in FIG. 4, the first manufacturing method includes:
a step (1) of manufacturing a glass substrate having a first main surface and a second main surface, and forming a coating layer on the first main surface of the glass substrate while manufacturing the glass substrate (step S110); and
a step (2) of forming a reflective layer on the coating layer (step S120).

In the following, the above-described processes will be described in detail.

### (Step S110)

In the process of step S110, a glass substrate is manufactured. While manufacturing the glass substrate, a coating layer is deposited by using the inline CVD method.

In the following, an example of the process of depositing a coating layer (step S110) including a high refraction index layer and a low refraction index layer (See FIG. 2) will be described.

In the deposition process, a CVD deposition apparatus is arranged above a tin bath, on which a glass ribbon is formed, or above a slow cooling furnace, which cools the glass ribbon slowly. The CVD deposition apparatus forms a high refraction index layer on an upper surface of the glass ribbon (first main surface), and subsequently a low refraction index layer on the high refraction index layer.

A total amount of iron (Fe) contained in the glass ribbon is preferably small. A concentration of an impure iron (Fe) in a glass raw material is required to be reduced.

Thus, a concentration of iron (Fe) in the manufactured glass substrate is reduced to 200 ppm or less.

The high refraction index layer is made of a material with a refraction index of 2 or more, such as titanium oxide. A thickness of the high refraction index layer falls within a range of 10 nm to 100 nm, for example. A temperature when the high refraction index layer is deposited falls within a range of 500 °C to 750 °C, for example.

The low refraction index layer is made of a material with a refraction index of 1.5 or less, such as silica. A thickness of the low refraction index layer falls within a range of 40 nm to 90 nm. A temperature when the low refraction index layer is deposited falls within a range of 500 °C to 750 °C.

In order to prepare the coating layer 120B having a four-layer structure, as shown in FIG. 3, an additional high refraction index layer and an additional low refraction index layer are deposited.

Thus, according to the manufacturing process of a glass substrate using the inline vapor deposition, a glass substrate with a coating layer on a first main surface (glass substrate with film) is obtained.

If the surface of the coating layer were to be smooth (e.g. the arithmetic average roughness Ra is less than 0.4 nm), the reflective layer, which will be deposited in the subsequent process S120, would not adhere to the coating layer sufficiently. In order to enhance the adhesiveness, an additional process would be required for the surface of the coating layer.

The surface of the coating layer of the above-described glass substrate with film has the arithmetic average roughness Ra of 0.4 nm or more.

Thus, the additional process is not always required for the surface of the coating layer in the first manufacturing method. The subsequent process S120 may be performed for the glass substrate with film after the process S110 in the first manufacturing method.

In the process of manufacturing a CSP mirror, the process S120 is performed for the glass substrate with film after the process S110. However, actually the glass substrates with coating layers after the process S110 will be shipped as products (glass substrate with film).

### (Step S120)

A reflective layer including silver is arranged on the coating layer of the glass substrate with film.

A method of arranging the reflective layer is not particularly limited.

The reflective layer is deposited by using a vacuum vapor deposition, an ion plating method, a sputtering method, a chemical vapor deposition (CVD) method (a thermal CVD method, a plasma CVD method, or an optical CVD method), a coating method, or the like.

A thickness of the reflective layer falls within a range of 50 nm to 5000 nm, for example.

Thus, the CSP mirror is manufactured.

The method of manufacturing the CSP mirror according to the embodiment of the present invention has been described with reference to FIG. 4.

However, the above-described method is merely an example. The CSP mirror according to the embodiment of the present invention may be manufactured by using the other method. For example, a CSP mirror may be manufactured by depositing a coating layer on a glass substrate by using an offline vapor deposition, and depositing a reflective layer on the coating layer by using an offline vapor deposition.

### EXAMPLES

Examples of the present invention will be described.

### (Evaluation of thickness of coating layer by using simulation)

An energy reflectance Re of the CSP mirror according to the embodiment of the present invention was evaluated by using simulation. Using results of the simulation, an optimum film thickness of the coating layer in the CSP mirror was estimated.

The software "Essential Macleod" (by SIGMAKOKI Co. Ltd.) was used for the simulation. The CSP mirror was assumed to have the structure shown in FIG. 1. The coating layer was assumed to have a first layer (titanium oxide) and a second layer (silica). An energy reflectance Re was calculated while changing thicknesses of the first layer and the second layer.

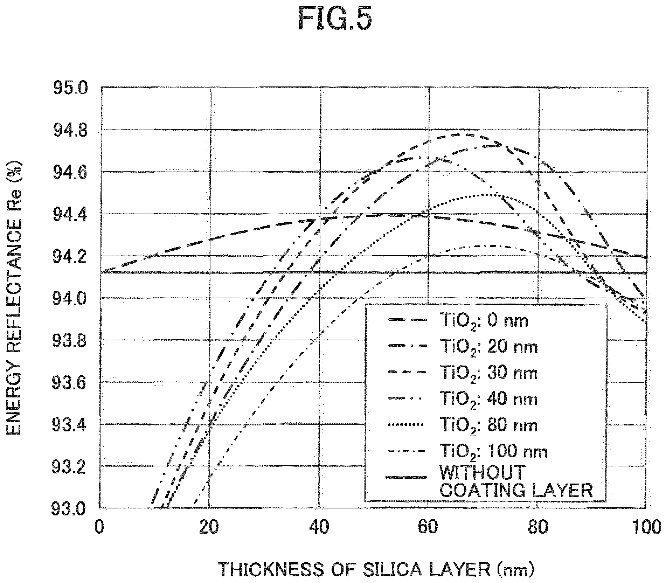

FIG. 5 shows an example of a result of the simulation.

A horizontal axis of FIG. 5 represents a thickness of the layer of silica, and a vertical axis represents the energy reflectance Re. A result of simulation for the energy reflectance Re while changing the thickness of the layer of silica with each of the thicknesses of the layer of titanium oxide of 0 nm, 20 nm, 30 nm, 40 nm, 80 nm and 100 nm is shown in FIG. 5.

The result of simulation for the CSP mirror without the coating layer is also shown in FIG. 5 as a horizontal solid line. The energy reflectance Re for the CSP mirror without the coating layer is 94.1%.

From the result of simulation, the energy reflectance Re is found to vary depending on the thicknesses of the layer of silica and the layer of titanium oxide.

For example, the energy reflectance Re of the CSP mirror without the layer of titanium oxide reaches a maximum when the thickness of the layer of silica falls within a range of 40 nm to 60 nm. The energy reflectance Re of the CSP mirror with the layer of titanium oxide with the thickness of 80 nm reaches a maximum when the thickness of the layer of silica falls within a range of 50 nm to 90 nm. The energy reflectance Re of the CSP mirror with the layer of titanium oxide with the thickness of 100 nm reaches a maximum when the thickness of the layer of silica falls within a range of 60 nm to 80 nm.

The energy reflectance Re of the CSP mirror reaches a maximum (94.8%) when the thickness of the layer of titanium oxide is 30 nm and the thickness of the layer of silica is 65 nm.

According to the above-described result of simulation, the coating layer preferably has the layer of silica with the thickness that falls within a range of 40 nm to 90 nm and the layer of titanium oxide with the thickness that is greater than 0 nm and less than or equal to 100 nm.

### (Evaluation using actual CSP mirror)

An example of an actually manufactured CSP mirror will be described. In the following description, Examples 1 to 6 illustrate CSP mirrors according to practical examples, and Examples 11 to 16 illustrate CSP mirrors according to comparative examples.

### (Example 1)

The CSP mirror having the structure shown in FIG. 1 was manufactured according to the following procedure.

A glass substrate (soda lime glass) with dimensions of 300 mm (vertical) × 300 mm (horizontal) × 2 mm (thickness) was provided.

By using a fluorescence X-ray analysis (XRF) apparatus (Primus II by Rigaku Corporation), the total iron (Fe) concentration contained in the glass substrate was measured. The measured iron (Fe) concentration was 175 ppm, assuming that iron forms Fe₂O₃ and using a weight of Fe₂O₃.

A coating layer was deposited on a first main surface of the glass substrate (one of the surfaces with the dimensions of 300 mm × 300 mm) by using an offline CVD method.

The coating layer was assumed to have the two-layer structure as shown in FIG. 2.

A layer of titanium oxide was deposited as a first layer.

Titanium tetraisopropoxide (TTIP) was used for a raw material of titanium oxide. Nitrogen gas was used for dilution gas. The deposition temperature was set to 580 °C.

A target thickness of the layer of titanium oxide was set to 36 nm.

A layer of silica was deposited as a second layer.

A mixed gas of monosilane (SiH₄), ethylene (C₂H₄), and oxygen (O₂), with a mixing ratio of SiH₄:C₂H₄:O₂ = 0.82:1.03:41.2 (in mol%) was used for a raw material. Nitrogen gas was used for dilution gas. The reposition temperature was set to 580 °C.

A target thickness of the layer of silica was set to 52 nm.

A surface roughness (arithmetic average roughness Ra) of the second layer was measured after the deposition of the layer of silica.

An atomic force microscope (AFM) apparatus (SPI-3800N/SPA 400, by SII Nano Technology Inc.) was used for the measurement of the surface roughness. The measurement was performed with an excitation voltage of 0.5 V. A length of a scanning area was set to 2.0 µm.

The arithmetic average roughness Ra of the second layer derived from the result of the measurement was 0.8 nm.

A layer of silver was deposited, on the second layer by using a sputtering method, to form a reflective layer.

The thickness of the layer of silver was 2000 nm.

According to the above-described procedure, a CSP mirror (hereinafter, referred to as "Example 1") was manufactured.

### (Examples 2 to 5)

According to the same procedure as that in Example 1, CSP mirrors (hereinafter, referred to as "Examples 2 to 5") were manufactured.

In Examples 2 to 5, the thickness of the first layer and the thickness of the second layer were different from those in Example 1. In particular, the layer of titanium oxide was absent in the coating layer of the CSP mirror according to Example 5, i.e. the coating layer was a single layer of silica.

### (Example 6)

According to the same procedure as that in Example 1, a CSP mirror (hereinafter, referred to as "Example 6") was manufactured.

The coating layer according to Example 6 had the four-layer structure, as shown in FIG. 3.

A first layer of the coating layer according to Example 6 was a layer of titanium oxide with a target thickness of 20 nm. A second layer was a layer of silica with a target thickness of 80 nm. A third layer was a layer of titanium oxide with a target thickness of 30 nm. A fourth layer was a layer of silica with a target thickness of 70 nm.

The surface roughness of the fourth layer was measured after the fourth layer was deposited. An arithmetic average roughness of the fourth layer was 1.1 nm.

### (Example 11)

A CSP mirror according to Example 11 was manufactured according to the following procedure.

A glass substrate of the same type as that in Example 1 was prepared.

By using the fluorescence X-ray analysis (XRF) apparatus (Primus II by Rigaku Corporation), a total iron (Fe) concentration contained in the glass substrate was measured. The measured iron (Fe) concentration was 175 ppm, assuming that iron forms Fe₂O₃ and using a weight of Fe₂O₃.

An arithmetic average surface roughness Ra of a first main surface of the glass substrate measured by using the above-described method was 0.2 nm.

A layer of silver was deposited on the first main surface of the glass substrate by using the sputtering method, to form a reflective layer. A thickness of the layer of silver was 2000 nm.

According to the above-described procedure, a CSP mirror provided only with the reflective layer on the glass substrate (hereinafter, referred to as "Example 11") was manufactured.

### (Examples 12 to 16)

According to the same procedure as that in Example 11, CSP mirrors (hereinafter, referred to as "Examples 12 to 16") were manufactured.

In Examples 12 to 16, the total iron (Fe) concentrations contained in the glass substrates were different from that in Example 11. Reflective layers were formed in the same way as in Example 11.

TABLE 1, in the following, shows the total iron (Fe) concentrations in the glass substrates, the structures and the film thicknesses of the coating layers, and the surface roughness of the members immediately below the reflective layers according to Examples 1 to 6 and 11 to 16 as a whole.

| Example | Glass substrate | Coating layer | | | | | | | | Surface roughness of member below reflective layer Ra (µm) |
|---|---|---|---|---|---|---|---|---|---|---|
| | Iron (Fe) concentration (ppm) | First layer | | Second layer | | Third layer | | Fourth layer | | |
| | | Material | Thickness (nm) | Material | Thickness (nm) | Material | Thickness (nm) | Material | Thickness (nm) | |
| 1 | 175 | TiO₂ | 36 | SiO₂ | 52 | - | - | - | - | 0.8 |
| 2 | 175 | TiO₂ | 43 | SiO₂ | 53 | - | - | - | - | 0.8 |
| 3 | 175 | TiO₂ | 54 | SiO₂ | 55 | - | - | - | - | 1.3 |
| 4 | 175 | TiO₂ | 63 | SiO₂ | 54 | - | - | - | - | 1.8 |
| 5 | 175 | - | - | SiO₂ | 40 | - | - | - | - | 0.4 |
| 6 | 175 | TiO₂ | 20 | SiO₂ | 80 | TiO₂ | 30 | SiO₂ | 70 | 1.1 |
| 11 | 175 | - | - | - | - | - | - | - | - | 0.2 |
| 12 | 742 | - | - | - | - | - | - | - | - | 0.2 |
| 13 | 589 | - | - | - | - | - | - | - | - | 0.2 |
| 14 | 432 | - | - | - | - | - | - | - | - | 0.2 |
| 15 | 381 | - | - | - | - | - | - | - | - | 0.2 |
| 16 | 240 | - | - | - | - | - | - | - | - | 0.2 |

### (Evaluation)

The following evaluation was performed for Examples 1 to 6 and 11 to 16.

### (Measurement of energy reflectance Re)

The energy reflectance Re was measured by using a Perkin Elmer spectrometer. A reflectance for light whose wavelength falls within a range of 300 nm to 2500 nm was measured for each example, and the energy reflectance Re was derived based on ISO 9050.

### (Adhesiveness evaluation test)

In an adhesiveness evaluation test, an adhesive tape (TRUSCO air-permeable adhesive tape) was pasted on a surface of the reflective layer of each example, and the adhesive tape was peeled off. If the reflective layer was not separated from the CSP mirror, the adhesiveness between the reflective layer and the member below the reflective layer was determined to be excellent.

TABLE 2, below, shows the results of evaluation for Examples 1 to 6 and 11 to 16 as a whole.

| Example | Energy reflectance Re (%) | Evaluation of adhesiveness |
|---|---|---|
| 1 | 94.7 | excellent |
| 2 | 94.6 | excellent |
| 3 | 94.3 | excellent |
| 4 | 94.3 | excellent |
| 5 | 94.4 | excellent |
| 6 | 95.0 | excellent |
| 11 | 94.1 | poor |
| 12 | 89.5 | poor |
| 13 | 91.0 | poor |
| 14 | 92.0 | poor |
| 15 | 92.4 | poor |
| 16 | 93.8 | poor |

From the results of adhesiveness evaluation test, the energy reflectance Re in each of Examples 11 to 16 was 94.1% or less. Thus, the reflection characteristics for Examples 11 to 16 were found to be poor. The energy reflectance Re in each of Examples 1 to 6 was 94.3% or more. The reflection characteristics for Examples 1 to 6 were found to be excellent.

Moreover, the adhesiveness between the reflective layer and the glass substrate in each of Examples 11 to 16 was found to be poor. The adhesiveness between the reflective layer and the coating layer in each of Examples 1 to 6 was found to be excellent.

The present application is based on and claims the benefit of priority of Japanese Priority Application No. 2017-006983 filed on January 18, 2017, the entire contents of which are hereby incorporated by reference.

### REFERENCE SIGNS LIST

- 100: first CSP mirror
- 102: first side
- 104: second side
- 110: glass substrate
- 112: first main surface
- 114: second main surface
- 120, 120A, 120B: coating layer
- 123, 123A, 123B: upper surface
- 130: reflective layer
- 150: first layer
- 152: lower surface
- 160: second layer
- 170: third layer
- 180: fourth layer

## Claims

1. A concentrated solar power mirror comprising:
a glass substrate;
a reflective layer containing silver; and
a coating layer arranged between the glass substrate and the reflective layer,
wherein a total iron weight concentration in the glass substrate is 200 ppm or less, assuming that iron forms Fe₂O₃ and using a weight of Fe₂O₃,
wherein an arithmetic average surface roughness of a reflective layer side surface of the coating layer is 0.4 nm or more, and
wherein an energy reflectance of the CSP mirror is 94.3% or more, when a thickness of the glass substrate is 2 mm.

2. The concentrated solar power mirror according to claim 1,
wherein the coating layer includes a layer of silica (SiO₂).

3. The concentrated solar power mirror according to claim 2,
wherein a thickness of the layer of silica (SiO₂) falls within a range of 40 nm to 90 nm.

4. The concentrated solar power mirror according to claim 2 or 3,
wherein the coating layer includes a high refraction index layer having a refraction index greater than a refraction index of silica (SiO₂), the high refraction index layer being provided between the glass substrate and the layer of silica.

5. The concentrated solar power mirror according to claim 4,
wherein the high refraction index layer includes a compound selected from a group including titanium oxide (TiO₂), silicon nitride (SiN), aluminum nitride (AlN), tin oxide (SnO₂), zinc oxide (ZnO), niobium oxide (Nb₂O₅), tantalum oxide (Ta₂O₅), zirconium oxide (ZrO), and combinations thereof.

6. The concentrated solar power mirror according to claim 4 or 5,
wherein a thickness of the high refraction index layer is greater than zero and less than or equal to 110 nm.

7. The concentrated solar power mirror according to any one of claims 1 to 6,
wherein the coating layer includes a high refraction index layer adjacent to the glass substrate; a first layer of silica (SiO₂) ; a second high refraction index layer, and a second layer of silica (SiO₂), in this order,
wherein a refraction index of the first high refraction index layer is higher than a refraction index of the first layer of silica, and
wherein a refraction index of the second high refraction index layer is higher than the refraction index of the first layer of silica and higher than a refraction index of the second layer of silica.

8. A method for manufacturing a glass substrate with a concentrate solar power mirror film, the method comprising:
a step (1) of manufacturing a glass substrate with a total iron weight concentration of 200 ppm or less, assuming that iron forms Fe₂O₃ and using a weight of Fe₂O₃, from a glass ribbon,
wherein during the step (1) a coating layer is deposited by using a CSV method on an upper surface of the glass ribbon, and
wherein an arithmetic average surface roughness of a surface of the coating layer is 0.4 nm or more.

9. The method for manufacturing a glass substrate with a concentrated solar power mirror film according to claim 8, wherein the coating layer includes a layer of silica (SiO₂).

10. The method for manufacturing a glass substrate with a concentrated solar power mirror film according to claim 8 or 9,
wherein the step (1) includes
a step of depositing a layer with a refraction index higher than a refraction index of silica (SiO₂); and
a step of depositing a layer including silica.
